# EUROPEAN PATENT APPLICATION

(11) **EP 4 224 458 A1**
(43) Date of publication of application: **09.08.2023**
(21) Application number: 21875022.2
(22) Date of filing: 30.08.2021
(51) Int. Cl.: G09B 5/14, G09B 19/00, G06Q 50/20, G06F 3/04842, G06F 3/04883

(54) **ADVICE DATA GENERATION DEVICE, ADVICE DATA GENERATION METHOD, AND PROGRAM**

(30) Priority: 29.09.2020 JP 2020163301
(71) Applicant: Z-KAI Inc., Mishima-shi, Shizuoka 411-0033 (JP)
(72) Inventor: WATANABE, Jun, Mishima-shi, Shizuoka 411-0033 (JP); ONO, Eisaku, Mishima-shi, Shizuoka 411-0033 (JP)
(74) Representative: MERH-IP Matias Erny Reichl Hoffmann Patentanwälte PartG mbB
(86) International application number: PCT/JP2021/031716
(87) International publication number: WO 2022/070719

(57) **Abstract**

An advice data generation device that is capable of generating advice data on how to write answers is provided. The advice data generation device includes: a time classification unit that classifies a time interval during which stroke data is present, in a predetermined time range defined as answering time, as an entering time interval based on the stroke data that is vector data of a coordinate of a trajectory of handwriting input and time, the handwriting input being performed by a user with respect to a predetermined electronic answer field to put an answer for a question; a time comparison unit that compares a length of each entering time interval of another user for each question with a length of each entering time interval of a target user for each question; and an advice generation unit that generates advice data representing a comparison result.

## Description

### [TECHNICAL FIELD]

The present invention relates to an advice data generation device, an advice data generation method, and a program for generating advice data based on stroke data inputted by handwriting in an electronic answer field.

### [BACKGROUND ART]

Patent Literature 1 discloses a method for analyzing exercise for entrance examination in which questions of an entrance examination of a school is analyzed and a trend in question-setting is grasped so as to give an advice incorporating the trend in an area of question-setting of the entrance examination of the school in association with the grade of a student.

In the method for analyzing exercise for entrance examination of Patent Literature 1, questions of entrance examination are analyzed based on classification in school, academic year, subject, and area of question-setting of a subject to grasp a trend in question-setting of a school, an advice database categorized into area and viewpoint consisting of comments with the trend in question-setting is prepared, and an optimal comment to an examination result of a student is extracted from the advice database, thus providing an advice.

### [PRIOR ART LITERATURE]

### [PATENT LITERATURE]

Patent Literature 1: Japanese Patent Application Laid Open No. 2002-215016

### [SUMMARY OF THE INVENTION]

### [PROBLEMS TO BE SOLVED BY THE INVENTION]

Most of advices provided by the related art including Patent Literature 1 are remarks on user's lack of academic ability and there have not been advices focusing on how to write answers.

In fact, there are countless cases in which two people with almost the same academic ability are separated by a large difference in their scores and receive mutually-opposite pass/fail results because one is good at writing answers and the other is bad at writing answers.

An object of the present invention is to provide an advice data generation device that is capable of generating advice data on how to write answers.

### [MEANS TO SOLVE THE PROBLEMS]

An advice data generation device according to the present invention includes a time classification unit, a time comparison unit, and an advice generation unit.

The time classification unit classifies a time interval during which stroke data is present, in a predetermined time range defined as answering time, as an entering time interval based on the stroke data that is vector data of a coordinate of a trajectory of handwriting input and time, the handwriting input being performed by a user with respect to a predetermined electronic answer field to put an answer for a question.

The time comparison unit compares a length of each entering time interval of another user for each question with a length of each entering time interval of a target user for each question.

The advice generation unit generates advice data representing a comparison result.

### [EFFECTS OF THE INVENTION]

According to the advice data generation device of the present invention, advice data on how to write answers can be generated.

### [BRIEF DESCRIPTION OF THE DRAWINGS]

FIG. 1 is a block diagram illustrating a configuration of an advice data generation device according to a first embodiment.
FIG. 2 is a flowchart showing an operation of the advice data generation device according to the first embodiment.
FIG. 3 is a diagram illustrating stroke data.
FIG. 4 is a diagram explaining an example of definition of each time interval classified by a time classification unit.
FIG. 5 is a diagram illustrating advice data.
FIG. 6 is a diagram illustrating a functional configuration example of a computer.

### [DETAILED DESCRIPTION OF THE EMBODIMENTS]

An embodiment according to the present invention will be described in detail below. Here, components having the mutually-same functions will be provided with the same reference numerals and the duplicate description thereof will be omitted.

### [First embodiment]

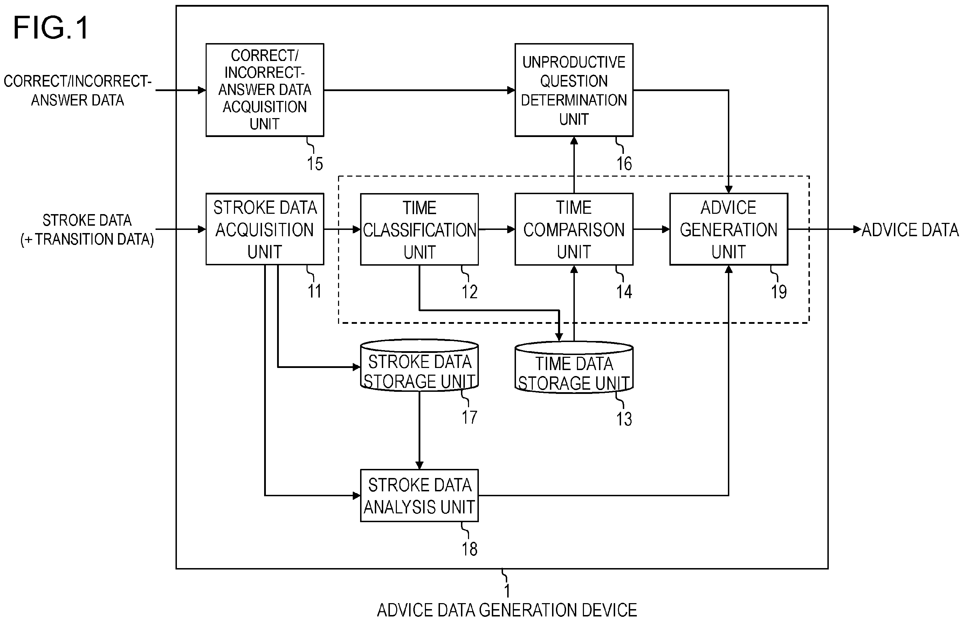

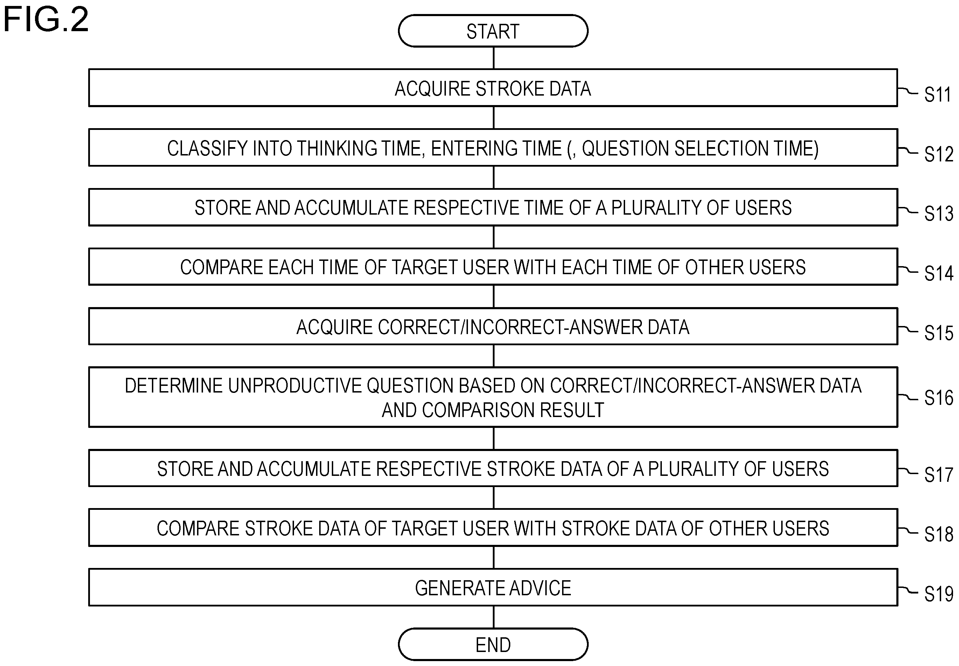

A configuration of an advice data generation device according to a first embodiment will be described below with reference to FIG. 1. As illustrated in the drawing, an advice data generation device 1 according to the present embodiment includes a stroke data acquisition unit 11, a time classification unit 12, a time data storage unit 13, a time comparison unit 14, a correct/incorrect-answer data acquisition unit 15, an unproductive question determination unit 16, a stroke data storage unit 17, a stroke data analysis unit 18, and an advice generation unit 19. The advice data generation device 1 of the first embodiment includes components that can be arbitrarily omitted. For example, the advice data generation device 1 of the first embodiment can be composed only of the components that are within the dashed frame (the time classification unit 12, the time comparison unit 14, the advice generation unit 19). In this configuration, each storage unit may use a storage region of another device or each component may include a memory to store necessary data thereon. An operation of each component will be described below with reference to FIGs. 2, 3, 4, and 5.

### <Stroke data acquisition unit 11>

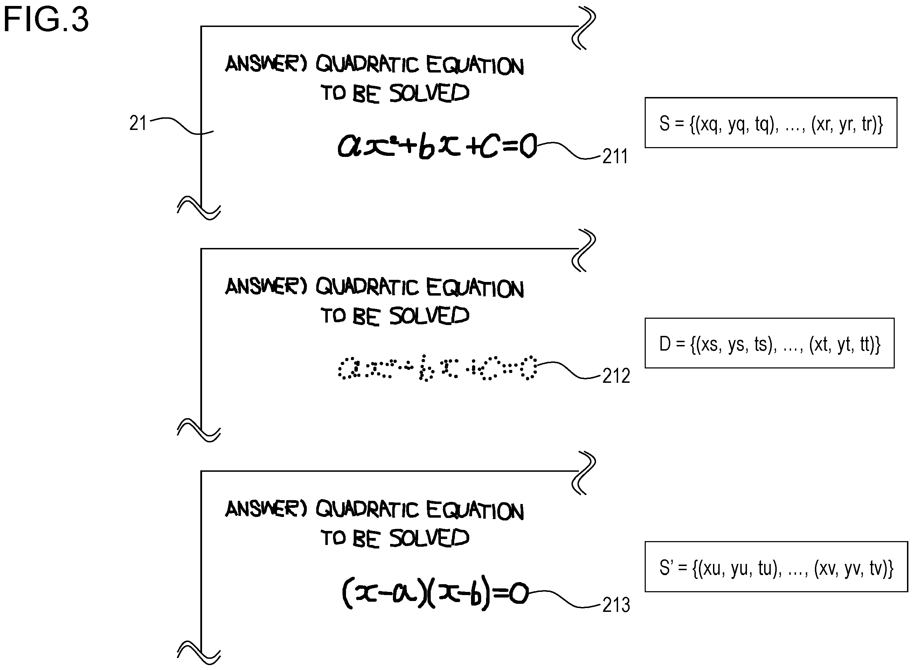

The stroke data acquisition unit 11 acquires stroke data that is vector data of a coordinate of a trajectory of handwriting input and time, where the handwriting input is performed by a user with respect to a predetermined electronic answer field as an answer to a question (S11). FIG. 3 illustrates an example of the stroke data. In the example of the drawing, there is stroke data 211: "ax²+bx+c = 0", for example, which is handwritten by a user with respect to an electronic answer field 21. The stroke data 211 is expressed as vector data S = {(xq, yq, tq), ..., (xr, yr, tr)} composed of a combination of a trajectory coordinate (x, y) and time t.

If this stroke data 211 is defined to be deleted by a user later, this stroke data 211 is re-stored as deleted data 212 (see characters handwritten with dashed lines in the drawing). The deleted data 212 is expressed as vector data D = {(xs, ys, ts), ..., (xt, yt, tt)}.

In the example of the drawing, stroke data 213 is newly generated by deleting "ax²+bx+c = 0" and inputting "(x-a)(x-b) = 0" instead by handwriting (S' = {(xu, yu, tu), ..., (xv, yv, tv)}). All the stroke data remaining in the electronic answer field at the end of answering is called remaining data.

### <Time classification unit 12>

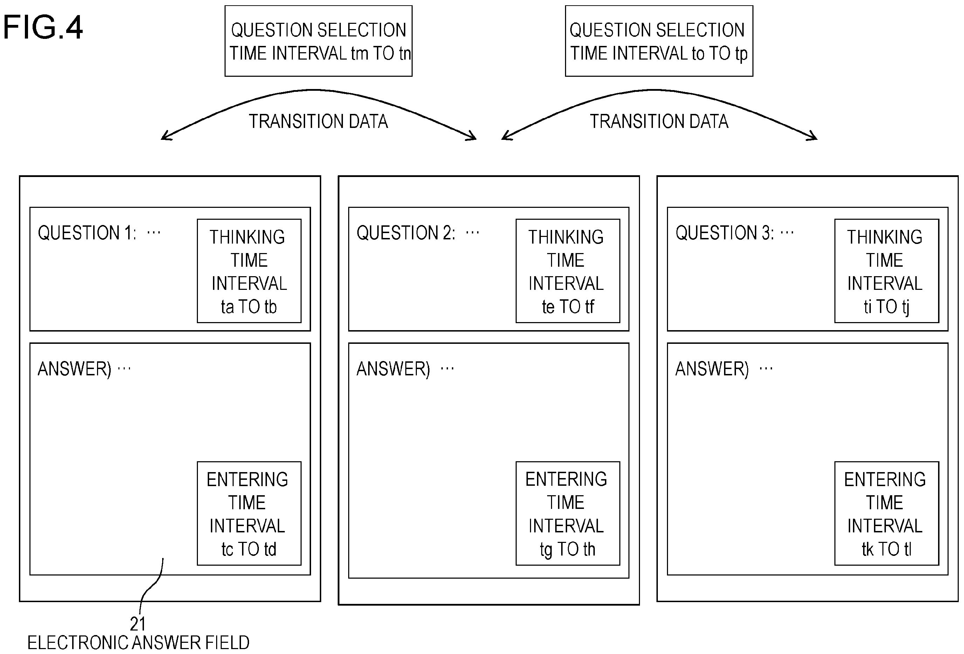

The time classification unit 12 classifies, based on the stroke data obtained in step S11, a time interval during which no stroke data is present as a thinking time interval and a time interval during which the stroke data is present as an entering time interval, in a predetermined time range which is defined as answering time (for example, examination time [60 minutes] and examination time [90 minutes] fall under the predetermined time range) (S12). Preferably, the time classification unit 12 may acquire transition data that is composed of an operation of transition between questions and a time interval in which the operation is performed so as to classify the time interval in which the operation is performed as a question selection time interval. For example, examination questions from Questions 1 to 3 (examination time T) can be classified as illustrated in FIG. 4. In the example of the drawing, an interval classified as thinking time interval ta to tb of Question 1 denotes that a time interval during which no stroke data was present in a state that a user was viewing a question text of Question 1 (or an answer field of Question 1) was ta to tb. In a similar manner, an interval classified as entering time interval tc to td of Question 1 denotes that a time interval during which stroke data (including both of deleted data and remaining data) with respect to the answer field of Question 1 was present was tc to td. Further, an interval classified as question selection time interval tm to tn denotes that a time interval during which a user performed an operation for transition of pages or displayed ranges from the question text of Question 1 to a question text of Question 2 was tm to tn.

### <Time data storage unit 13>

The time data storage unit 13 stores and accumulates time intervals, which are obtained by carrying out step S12, of respective users for a plurality of users (S13). For example, time intervals may be stored and accumulated in association with respective user IDs that are identifiers of the users.

### <Time comparison unit 14>

The time comparison unit 14 compares the length of each time interval (a thinking time interval for each question, an entering time interval for each question, a question selection time interval) of other users with the length of each time interval of a target user (a user to be advised) (S14). The time comparison unit 14 performs the above-mentioned comparison and generates a comparison result such as "Entering time of the target user for Question 2 is twice as long as the average of other users". Conceivable examples of the comparison result include "Thinking time of the target user for Question 3 is 10 minutes longer than the average of other users" and "Question selection time of the target user is 3 minutes shorter than the average of other users".

### <Correct/incorrect-answer data acquisition unit 15>

The correct/incorrect-answer data acquisition unit 15 acquires correct/incorrect-answer data indicating whether an answering result of a user for a question is a correct answer, an incorrect answer, or a partially-correct answer (S15). The correct/incorrect-answer data may be, for example, a flag of correct answer = 2, partially-correct answer = 1, or incorrect answer = 0, or a score format in which correct answer = 10, partially-correct answer = value out of 9 to 1, or incorrect answer = 0.

### <Unproductive question determination unit 16>

When a comparison result (see S14) indicating that a thinking time interval or an entering time interval of a target user for a certain question is longer by a predetermined or greater degree than that of other users is generated, the unproductive question determination unit 16 determines that this question is an unproductive question for the target user (S16).

It is more preferable that when correct/incorrect-answer data of a certain user for a certain question indicates an incorrect answer or a partially-correct answer (see S15) and a comparison result (see S14) indicating that a thinking time interval or an entering time interval of the target user for this question is longer by a predetermined or greater degree than that of other users is generated, the unproductive question determination unit 16 determines that this question is an unproductive question for the target user.

### <Stroke data storage unit 17>

The stroke data storage unit 17 stores and accumulates stroke data for each question, which is obtained by carrying out step S 11, of respective users for a plurality of users (S17). For example, stroke data may be stored and accumulated in association with respective user IDs and question IDs that are identifiers of questions.

### <Stroke data analysis unit 18>

The stroke data analysis unit 18 compares amounts of remaining data and deleted data of stroke data of a target user with amounts of remaining data and deleted data of stroke data of a plurality of other users for the same question so as to analyze a trend of an answer of the target user with respect to answers of other users (S18). For example, the stroke data analysis unit 18 is capable of generating analysis results such as "The total amount of stroke data (remaining data + deleted data) of the target user is three times as large as the average of other users" and "The remaining data in the stroke data of the target user is almost the same as the average of other users, but the deleted data is longer by five lines than the average of other users".

### <Advice generation unit 19>

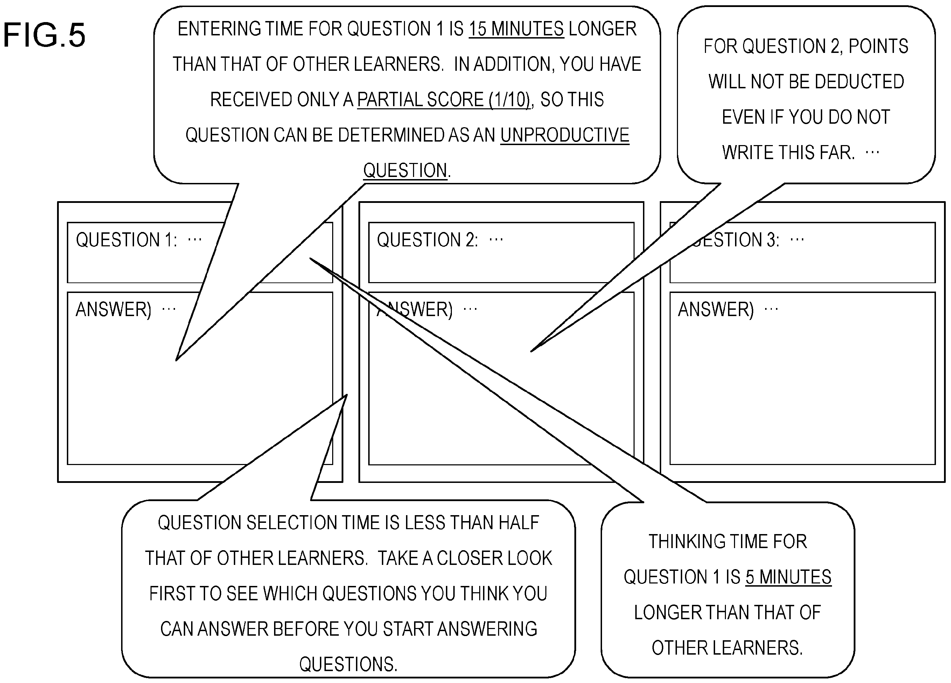

The advice generation unit 19 generates advice data representing the above-described comparison result, unproductive question, and analysis result (S19). FIG. 5 illustrates an example of advice data generated by the advice generation unit 19. Texts shown in balloons in the drawing are examples of the advice data. Examples of conceivable texts for comparison results include "Thinking time for Question 1 is 5 minutes longer than that of other learners", "Entering time for Question 3 is 10 minutes shorter than that of other learners", and "Question selection time is less than half that of other learners. Take a closer look first to see which questions you think you can answer before you start answering questions".

Examples of conceivable texts for unproductive questions include "Entering time for Question 1 is 15 minutes longer than that of other learners. In addition, you have received only a partial score (1/10), so this question can be determined as an unproductive question" and "Entering time for Question 1 is 1.5 times as long as that of other learners. In addition, Question 1 was incorrect (no partial score), so this question can be determined as an unproductive question".

Examples of conceivable texts for analysis results include "For Question 2, points will not be deducted even if you do not write this far. ..." and "Points have been deducted from the answer for Question 2 due to the lack of required statements....".

### <Appendix>

The device according to the present invention has, as a single hardware entity, for example, an input unit to which a keyboard or the like is connectable, an output unit to which a liquid crystal display or the like is connectable, a communication unit to which a communication device (for example, communication cable) capable of communication with the outside of the hardware entity is connectable, a central processing unit (CPU, which may include cache memory and/or registers), RAM or ROM as memories, an external storage device which is a hard disk, and a bus that connects the input unit, the output unit, the communication unit, the CPU, the RAM, the ROM, and the external storage device so that data can be exchanged between them. The hardware entity may also include, for example, a device (drive) capable of reading and writing a recording medium such as a CD-ROM as necessary. A physical entity having such hardware resources may be a general-purpose computer, for example.

The external storage device of the hardware entity has stored therein programs necessary for embodying the aforementioned functions and data necessary in the processing of the programs (in addition to the external storage device, the programs may be prestored in ROM as a storage device exclusively for reading out, for example). Also, data or the like resulting from the processing of these programs are stored in the RAM and the external storage device as appropriate.

In the hardware entity, the programs and data necessary for processing of the programs stored in the external storage device (or ROM and the like) are read into memory as necessary to be interpreted and executed/processed as appropriate by the CPU. As a consequence, the CPU embodies predetermined functions (the individual components represented above as units, means, or the like).

The present invention is not limited to the above embodiment, but modifications may be made within the scope of the gist of the present invention as appropriate. Also, the processes described in the embodiment may be executed not only in a chronological sequence in accordance with the order of their description but may be executed in parallel or separately according to the processing capability of the device executing the processing or any necessity.

As already mentioned, when the processing functions of the hardware entities described in the embodiment (the device of the present invention) are to be embodied with a computer, the processing details of the functions to be provided by the hardware entities are described by a program. By the program then being executed on the computer, the processing functions of the hardware entity are embodied on the computer.

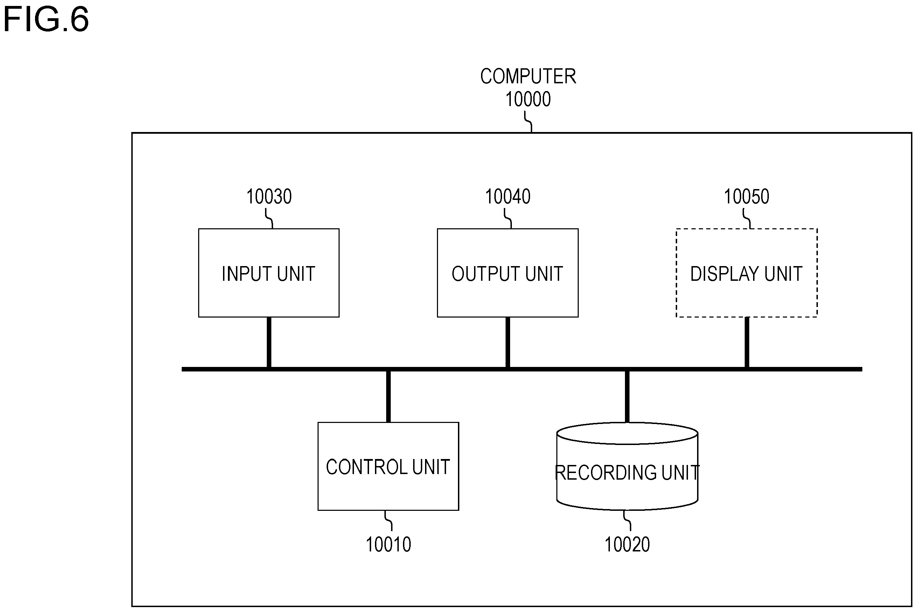

The various kinds of processing mentioned above can be implemented by loading a program for executing the steps of the above method into a recording unit 10020 of the computer 10000 shown in FIG. 6 to operate a control unit 10010, an input unit 10030, an output unit 10040, and the like.

The program describing the processing details can be recorded on a computer-readable recording medium. The computer-readable recording medium may be any kind, such as a magnetic recording device, an optical disk, a magneto-optical recording medium, or a semiconductor memory. More specifically, a magnetic recording device may be a hard disk device, flexible disk, or magnetic tape; an optical disk may be a DVD (digital versatile disc), a DVD-RAM (random access memory), a CD-ROM (compact disc read only memory), or a CD-R (recordable)/RW (rewritable); a magneto-optical recording medium may be an MO (magneto-optical disc); and a semiconductor memory may be EEP-ROM (electrically erasable and programmable-read only memory), for example.

Also, the distribution of this program is performed by, for example, selling, transferring, or lending a portable recording medium such as a DVD or a CD-ROM on which the program is recorded. Furthermore, a configuration may be adopted in which this program is distributed by storing the program in a storage device of a server computer and transferring the program to other computers from the server computer via a network.

The computer that executes such a program first, for example, temporarily stores the program recorded on the portable recording medium or the program transferred from the server computer in a storage device thereof. At the time of execution of processing, the computer then reads the program stored in the storage device thereof and executes the processing in accordance with the read program. Also, as another form of execution of this program, the computer may read the program directly from the portable recording medium and execute the processing in accordance with the program and, furthermore, every time the program is transferred to the computer from the server computer, the computer may sequentially execute the processing in accordance with the received program. Also, a configuration may be adopted in which the transfer of a program to the computer from the server computer is not performed and the above-described processing is executed by so-called application service provider (ASP)-type service by which the processing functions are implemented only by an instruction for execution thereof and result acquisition. Note that a program in this form shall encompass information that is used in processing by an electronic computer and acts like a program (such as data that is not a direct command to a computer but has properties prescribing computer processing).

Further, although the hardware entity was described as being configured via execution of a predetermined program on a computer in this form, at least some of these processing details may instead be embodied with hardware.

## Claims

1. An advice data generation device comprising:
a time classification unit that classifies a time interval, during which stroke data is present, as an entering time interval based on the stroke data that is vector data of a coordinate of a trajectory of handwriting input and time, the handwriting input being performed by a user with respect to a predetermined electronic answer field to put an answer for a question;
a time comparison unit that compares a length of each entering time interval of another user for each question with a length of each entering time interval of a target user for each question; and
an advice generation unit that generates advice data representing a comparison result.

2. The advice data generation device according to Claim 1, wherein
the time classification unit classifies a time interval during which the stroke data is not present, in a predetermined time range defined as answering time, as a thinking time interval, and
the time comparison unit compares a length of each thinking time interval of another user for each question with a length of each thinking time interval of a target user for each question.

3. The advice data generation device according to Claim 2, wherein
the time classification unit acquires transition data that is composed of an operation of transition between questions and a time interval in which the operation is performed so as to classify the time interval in which the operation is performed as a question selection time interval, and
the time comparison unit compares a length of the question selection time interval of another user with a length of the question selection time interval of a target user.

4. The advice data generation device according to Claim 2 or 3, comprising:
an unproductive question determination unit that determines that a certain question is an unproductive question for a target user when a comparison result is generated, the comparison result indicating that the thinking time interval or the entering time interval of the target user for the certain question is longer by a predetermined or greater degree than the thinking time interval or the entering time interval of another user, wherein
the advice generation unit generates advice data representing the unproductive question as well as the comparison result.

5. The advice data generation device according to Claim 4, comprising:
a correct/incorrect-answer data acquisition unit that acquires correct/incorrect-answer data indicating whether an answering result of the user for the question is a correct answer, an incorrect answer, or a partially-correct answer, wherein
when the correct/incorrect-answer data of a certain user for a certain question indicates an incorrect answer or a partially-correct answer and a comparison result is generated, the comparison result indicating that the thinking time interval or the entering time interval of the target user for the question is longer by a predetermined or greater degree than the thinking time interval or the entering time interval of another user, the unproductive question determination unit determines that the question is an unproductive question for the target user.

6. The advice data generation device according to any one of Claims 1 to 5, comprising:
a stroke data analysis unit that compares amounts of remaining data and deleted data of stroke data of a target user with amounts of remaining data and deleted data of stroke data of a plurality of other users for a same question so as to analyze a trend of an answer of the target user with respect to an answer of the other users, wherein
the advice generation unit generates advice data representing an analysis result as well as the comparison result.

7. An advice data generation method comprising:
a time classification step for classifying a time interval during which stroke data is present, in a predetermined time range defined as answering time, as an entering time interval based on the stroke data that is vector data of a coordinate of a trajectory of handwriting input and time, the handwriting input being performed by a user with respect to a predetermined electronic answer field to put an answer for a question;
a time comparison step for comparing a length of each entering time interval of another user for each question with a length of each entering time interval of a target user for each question; and
an advice generation step for generating advice data representing a comparison result.

8. The advice data generation method according to Claim 7, wherein
in the time classification step, a time interval during which the stroke data is not present, in the predetermined time range defined as answering time, is classified as a thinking time interval, and
in the time comparison step, a length of each thinking time interval of another user for each question is compared with a length of each thinking time interval of a target user for each question.

9. The advice data generation method according to Claim 8, wherein
in the time classification step, transition data that is composed of an operation of transition between questions and a time interval in which the operation is performed is acquired so as to classify the time interval in which the operation is performed as a question selection time interval, and
in the time comparison step, a length of the question selection time interval of another user is compared with a length of the question selection time interval of a target user.

10. The advice data generation method according to Claim 8 or 9, comprising:
an unproductive question determination step for determining that a certain question is an unproductive question for a target user when a comparison result is generated, the comparison result indicating that the thinking time interval or the entering time interval of the target user for the certain question is longer by a predetermined or greater degree than the thinking time interval or the entering time interval of another user, wherein
in the advice generation step, advice data representing the unproductive question as well as the comparison result is generated.

11. The advice data generation method according to Claim 10, comprising:
a correct/incorrect-answer data acquisition step for acquiring correct/incorrect-answer data indicating whether an answering result of the user for the question is a correct answer, an incorrect answer, or a partially-correct answer, wherein
in the unproductive question determination step, when the correct/incorrect-answer data of a certain user for a certain question indicates an incorrect answer or a partially-correct answer and a comparison result is generated, the comparison result indicating that the thinking time interval or the entering time interval of the target user for the question is longer by a predetermined or greater degree than the thinking time interval or the entering time interval of another user, the question is determined as an unproductive question for the target user.

12. The advice data generation method according to any one of Claims 7 to 11, comprising:
a stroke data analysis step for comparing amounts of remaining data and deleted data of stroke data of a target user with amounts of remaining data and deleted data of stroke data of a plurality of other users for a same question so as to analyze a trend of an answer of the target user with respect to an answer of the other users, wherein
in the advice generation step, advice data representing an analysis result as well as the comparison result is generated.

13. A program making a computer function as the advice data generation device according to any one of Claims 1 to 6.
